# EUROPÄISCHE PATENTSCHRIFT

(11) **EP 3 527 325 B1**
(45) Veröffentlichungstag und Bekanntmachung des Hinweises auf die Patenterteilung: **07.04.2021**
(21) Anmeldenummer: 19156199.2
(22) Anmeldetag: 08.02.2019
(51) Int. Cl.: B23Q 7/14, B62D 65/18

(54) **BEARBEITUNGSANORDNUNG ZUR BEARBEITUNG VON WERKSTÜCKEN**
PROCESSING ASSEMBLY FOR MACHINING WORKPIECES
DISPOSITIF D'USINAGE DESTINÉ À L'USINAGE DES PIÈCES À USINER

(30) Priorität: 19.02.2018 DE 102018202441
(43) Veröffentlichungstag der Anmeldung: 21.08.2019
(73) Patentinhaber: AUDI AG, 85045 Ingolstadt (DE)
(72) Erfinder: Schmidt, Jörg, 85057 Ingolstadt (DE); Maier, Tashina, 80687 München (DE); Gerstmann, Thomas, 93339 Riedenburg (DE)

(56) Entgegenhaltungen:
- EP-A2- 1 321 225
- DE-U1-202010 015 827
- GB-A- 2 260 717
- US-A- 5 226 584

## Beschreibung

Die Erfindung betrifft eine Bearbeitungsanordnung zur Bearbeitung von Werkstücken gemäß dem Oberbegriff des Patentanspruchs 1.

In der industriellen Fertigung tritt häufig die Notwendigkeit auf, dass eine Vielzahl von Werkstücken einem bestimmten immer gleichen oder ähnlichen Bearbeitungsprozess unterzogen werden müssen. In solchen Fällen werden häufig Bearbeitungsstationen eingesetzt, die an den zu ihnen transportierten Werkstücken die Bearbeitungsprozesse durchführen. Um eine schnelle und flexible Bearbeitung zu gewährleisten, kommen darüber hinaus fahrerlose Transportfahrzeuge zum Einsatz, mittels der die in einer Aufnahmevorrichtung aufgenommenen Werkstücke transportiert werden.

In der DE 10 2013 016 826 A1 ist eine Anordnung beschrieben, bei der Rohbaugruppen zu einer Bearbeitungsstation transportiert und in einer Aufnahmevorrichtung platziert werden. Die Aufnahmevorrichtung wird dann mittels fahrerloser Transportfahrzeuge zu der Fügestation hin bewegt und an diese übergeben. Nach dem Fügevorgang wird die Aufnahmevorrichtung mitsamt den jeweiligen Rohbaugruppenvarianten von einem fahrerlosen Transportfahrzeug übernommen und wegtransportiert. Nachteilig dabei ist, dass mehrere Übergabeschritte erforderlich sind. Das Ein- und Ausschleusen an der Bearbeitungsstation erhöht die Transportzeit des Werkstücks. Zudem benötigen die Bänder zum Übergeben zusätzliche Fläche an den Bearbeitungsstationen.

Eine ähnliche Anordnung ist der DE 20 2010 015 827 U1 zu entnehmen. Es handelt sich dabei um eine Anordnung aus einer Transportvorrichtung für Fahrzeugkomponenten und einer Bestückungs- und Schweißstation. Die Transportvorrichtung transportiert Fahrzeugkomponenten von einem Lager zu der Bestückungs- und Schweißstation. Bei der Transportvorrichtung handelt es sich um ein Flurfahrzeug, das über eine Aufnahmepalette verfügt und auf dieser eine Basisplatte aufnehmen kann. Auf der Basisplatte ist das zu schweißende Gut angeordnet und fixiert. Das Flurfahrzeug stapelt die Basisplatte mit fixiertem, zu schweißendem Gut auf der Aufnahmepalette der Bestückungsstation, von wo die bestückte Basisplatte nach dem Bestückungsvorgang an die Schweißstation übergeben wird. Nach dem Schweißvorgang wird die Basisplatte mit dem geschweißten Gut entnommen und weitertransportiert. Auch hier besteht der Nachteil der Anordnung darin, dass das Ein- und Ausschleusen an der Bearbeitungsstation die Transportzeit des Werkstücks und damit die Bearbeitungszeit insgesamt erhöht.

Weiter ist es aus der DE 10 2013 113 729 A1 bekannt, zu Montagezwecken Fahrzeugrohkarosserien auf einem Fahrwagen mittels einer Werkstückaufnahme anzuordnen. Die Werkstückaufnahme ist dabei zum Beispiel auf einer Hubeinrichtung des Fahrwagens angeordnet, so dass die Rohkarosserie auf dem Fahrwagen in unterschiedliche Höhen angehoben werden kann. Der Fahrwagen ist dabei so gestaltet, dass er bei angehobener Rohkarosserie zum Beispiel von einer Hochzeitsplattform mit darauf angeordnetem Antriebsstrang unterfahren werden kann, um diesen an die Rohkarosserie zu montieren. Weiter kann vorgesehen sein, auf dem Fahrwagen einen Handhabungsautomaten anzuordnen

Dokument GB-A-2 260 717 beschreibt eine Bearbeitungsanordnung zur Bearbeitung von Werkstücken, wobei die Bearbeitungsanordnung ein fahrerloses Transportfahrzeug mit einer Werkstückaufnahme und eine Bearbeitungsstation umfasst. Das fahrerlose Transportfahrzeug ist relativ zur Bearbeitungsstation bewegbar, so dass ein in der Werkstückaufnahme aufgenommenes Werkstück in eine Bearbeitungsposition transportierbar ist. Eine Abstützvorrichtung ist vorgesehen, die bei in Bearbeitungsposition befindlichem Werkstück das Werkstück festhält, so dass von der Bearbeitungsstation auf das Werkstück aufgebrachte Kräfte ohne Lageveränderung des Werkstücks durch die Abstützvorrichtung aufnehmbar sind.

Ausgehend von dem vorstehend genannten Stand der Technik ist es Aufgabe der Erfindung, eine Bearbeitungsanordnung zur Bearbeitung von Werkstücken anzugeben, bei der das Ein- und Ausschleusen der Werkstücke an der Bearbeitungsstation entfällt und die eine Bearbeitung der Werkstücke unter Ausübung von Druck auf das Werkstück zulässt.

Die Aufgabe ist durch die Merkmale des Anspruches 1 gelöst. Bevorzugte Weiterentwicklungen der Erfindung sind in den Unteransprüchen offenbart. Ausgegangen wurde von einer Bearbeitungsanordnung zur Bearbeitung von Werkstücken, wobei die Bearbeitungsanordnung ein fahrerloses Transportfahrzeug mit einer Werkstückaufnahme und wenigstens eine Bearbeitungsstation umfasst und wobei wenigstens das fahrerlose Transportfahrzeug relativ zur Bearbeitungsstation bewegbar ist, derart, dass mittels des fahrerlosen Transportfahrzeugs ein in der Werkstückaufnahme aufgenommenes Werkstück in eine Bearbeitungsposition transportierbar ist.

Es wird vorgeschlagen eine Abstützvorrichtung vorzusehen, die bei in Bearbeitungsposition befindlichem Werkstück am fahrerlosen Transportfahrzeug oder an dem im fahrerlosen Transportfahrzeug aufgenommenen Werkstück angreift, derart, dass von der Bearbeitungsstation auf das Werkstück aufgebrachte Kräfte ohne Lageveränderung des Werkstücks durch die Abstützvorrichtung aufnehmbar sind. Der Vorteil einer solchen Lösung besteht darin, dass das Ein- und Ausschleusen der Werkstücke an der Bearbeitungsstation entfällt und dass auch Bearbeitungsvorgänge möglich sind, die Kräfte auf das Werkstück aufbringen, bei denen das Werkstück einer kraftaufnehmenden Abstützung bedarf.

Eine vorteilhafte Ausbildung der Bearbeitungsanordnung sieht vor, dass die Bearbeitungsstation einen relativ zum Werkstück an unterschiedliche Bearbeitungsstellen des Werkstücks beweglichen Bearbeitungskopf aufweist und dass die Abstützvorrichtung so ausgebildet ist, dass diese das Werkstück unabhängig von der jeweiligen Bearbeitungsstelle gleichermaßen kraftaufnehmend direkt oder indirekt abstützt.

Die Abstützvorrichtung ist Teil der Bearbeitungsstation und stützt bei in die Bearbeitungsstation eingefahrenem fahrerlosem Transportfahrzeug das in der Werkstückaufnahme aufgenommene Werkstück direkt oder indirekt ab.

Dadurch wird vorteilhaft erreicht, dass einerseits Bauteile eingespart werden können, andererseits ist bei passgenauer Positionierung des im fahrerlosen Transportfahrzeug aufgenommenen Werkstück auf der Abstützvorrichtung ein Ausrichtvorgang der Bearbeitungsstation relativ zur Abstützvorrichtung beziehungsweise zum Werkstück nicht erforderlich.

Es ist an dieser Stelle darauf hinzuweisen, dass es durchaus Anwendungsfälle gibt, bei denen eine autonome Anordnung der Abstützvorrichtung von Vorteil ist, zum Beispiel dann, wenn neben dem fahrerlosen Transportfahrzeug mit dem in diesem aufgenommenen Werkstück auch wenigstens eine verfahrbare Bearbeitungsstation Verwendung findet. Solche Fälle sind insbesondere dann denkbar, wenn an einem Werkstück, das mittels des fahrerlosen Transportfahrzeugs auf einer autonomen Abstützvorrichtung platziert wurde von unterschiedlichen, autonom beweglichen Bearbeitungsstationen Bearbeitungsvorgänge auszuführen sind.

Wenn es sich um eine an der Bearbeitungsstation befindliche Abstützvorrichtung handelt, ist diese vorteilhaft als ein an der Bearbeitungsstation angeordneter Träger mit wenigstens einer flächigen Abstützung ausgebildet und es ist an dem fahrerlosen Transportfahrzeug und/ oder dem Werkstück wenigstens eine zu der wenigstens einen flächigen Abstützung als Gegenfläche wirkende Fläche vorgesehen. Flächige Abstützung und Gegenfläche sind dabei so zueinander orientiert, dass diese bei in die Bearbeitungsstation eingefahrenem fahrerlosem Transportfahrzeug in Anlage sind. Werden entsprechend viele Abstützflächen an dem Träger und Gegenflächen an dem fahrerlosen Transportfahrzeug und/ oder dem Werkstück vorgesehen und zueinander orientiert, lässt sich eine Abstützung des Werkstücks in allen drei Raumrichtungen erreichen.

In einer weiteren Ausgestaltung der Bearbeitungsanordnung ist vorteilhaft vorgesehen, dass der an der Bearbeitungsstation angeordnete Träger ein Bearbeitungstisch ist und dass an dem fahrerlosen Transportfahrzeug ein Werkstückträger angeordnet ist. Bearbeitungsstation und fahrerloses Transportfahrzeug sind dabei so ausgebildet, dass nach Einfahren des fahrerlosen Transportfahrzeugs in die Bearbeitungsstation der Werkstückträger direkt oder indirekt auf dem Bearbeitungstisch aufliegt.

Die Vorteile der erfindungsgemäßen Bearbeitungsanordnung zur Bearbeitung von Werkstücken kommen besonders zur Geltung, wenn es sich bei der Bearbeitungsstation um eine Vorrichtung zum Verformen des Werkstücks oder zum Einpressen wenigstens eines Bauteils in das Werkstück handelt. Die Anwendung ist jedoch nicht auf solche Fälle gegrenzt, es kann sich natürlich auch um eine spanende Bearbeitung des Werkstücks handeln oder um eine Bearbeitung, bei der die passgenaue Platzierung im Vordergrund steht.

Zur passgenauen Zusammenführung von an dem fahrerlosen Transportfahrzeug angeordnetem Werkstück und Bearbeitungsstation ist es von Vorteil, wenn an dem fahrerlosen Transportfahrzeug und/ oder der Werkstückaufnahme einerseits und an der Abstützvorrichtung und/ oder der Bearbeitungsstation andererseits Zentriermittel vorgesehen sind, die beim Einfahren des fahrerlosen Transportfahrzeug in die Bearbeitungsstation eine definierte Lage des Werkstücks zur Bearbeitungsstation herstellen. Auf diese Weise lassen sich zusätzliche Zentriervorgänge vermeiden. Die Zentriermittel können dabei vorteilhaft mechanisch wirkende Zentriermittel sein. Alternativ oder zusätzlich können vorteilhaft elektronische auf die Steuerung der Bearbeitungsstation und/ oder auf die Steuerung des fahrerlosen Transportfahrzeugs wirkende Zentriermittel zum Einsatz kommen. Mechanische Zentriermittel wie Stift-Loch-Kombinationen oder Flächen und Gegenflächen sind in der Technik in vielfältiger Ausgestaltung bekannt, alle derartigen mechanischen Zentriermittel lassen sich für den angestrebten Zweck einsetzen. Auch was den Einsatz von elektronischen auf die Steuerung der Bearbeitungsstation und/ oder auf die Steuerung des fahrerlosen Transportfahrzeugs wirkende Zentriermittel angeht, gibt es zum Beispiel in Verbindung mit der automatischen Kopplung von autonom zueinander beweglichen Gegenständen vielfältige Beispiele wie solche Zentriermittel auszubilden sind.

Um eine Relativbewegung zwischen fahrerlosem Transportfahrzeug, Abstützvorrichtung und Bearbeitungsstation nach dem Einfahren des fahrerlosen Transportfahrzeug in die Bearbeitungsstation zu unterbinden ist es von Vorteil, an dem fahrerlosen Transportfahrzeug einerseits und an der Abstützvorrichtung und/oder der Bearbeitungsstation andererseits Verriegelungsmittel vorzusehen, die nach dem Einfahren des fahrerlosen Transportfahrzeug in die Bearbeitungsstation dieses in einer definierten Lage zur Bearbeitungsstation lösbar verriegeln.

Weitere Ausgestaltungen und Vorteile der Erfindung werden nachfolgend anhand der Zeichnung näher erläutert. Es zeigen:
- Fig. 1: eine Prinzipdarstellung einer ersten Ausführungsform einer Bearbeitungsanordnung zur Bearbeitung von Werkstücken;
- Fig. 2: eine Prinzipdarstellung einer Abwandlung der Bearbeitungsanordnung gemäß Fig. 1;
- Fig. 3: eine Prinzipdarstellung einer zweiten Ausführungsform einer Bearbeitungsanordnung zur Bearbeitung von Werkstücken.

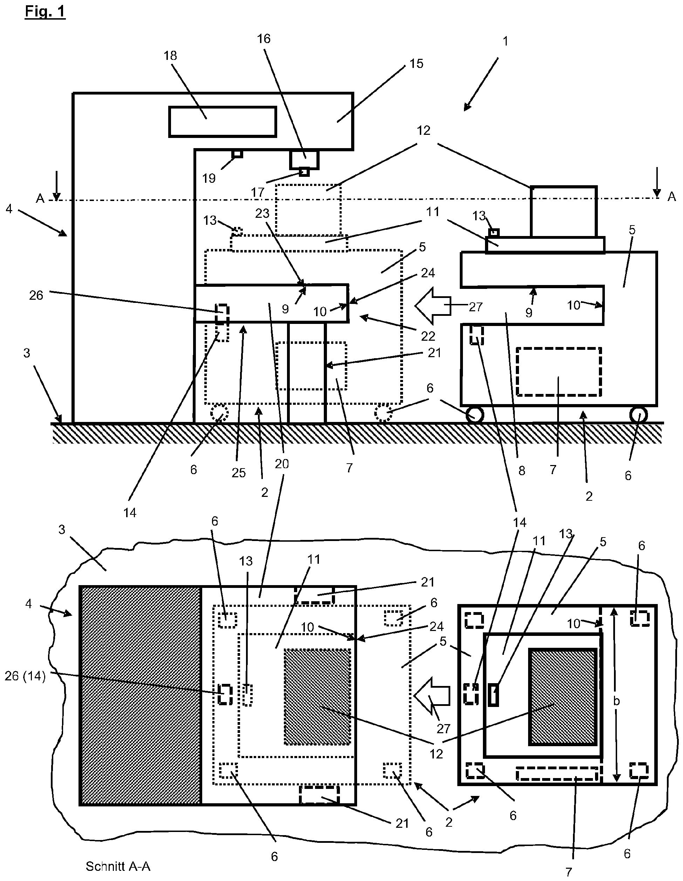

Die Fig. 1 zeigt in vereinfachter Darstellung das Prinzip einer Bearbeitungsanordnung 1 zur Bearbeitung von Werkstücken in einer ersten Ausführungsform. Gezeigt ist in der oberen Darstellung eine Seitenansicht der Anordnung, bestehend aus einem fahrerlosen Transportfahrzeug 2, das auf einer befahrbaren Fläche 3 verfahrbar angeordnet ist und einer Bearbeitungsstation 4 die mit der befahrbaren Fläche 3 fest verbunden ist. In der unteren Darstellung ist ein Schnitt A-A durch die obere Darstellung gezeigt, die Blickrichtung auf die Schnittfläche ist durch die auf die Schnittlinie gerichteten Pfeile angedeutet.

Das fahrerlose Transportfahrzeug 2 ist in zwei Positionen dargestellt, einer ersten mit durchgezogenen Linien dargestellten Position im nicht gekoppelten Zustand und einer in gestrichelter Linie dargestellten zweiten Position, in der das fahrerlose Transportfahrzeug 2 mit der Bearbeitungsstation 4 gekoppelt ist.

Das fahrerlose Transportfahrzeug 2 weist einen Grundkörper 5 auf, der auf Rädern 6 ruht. Mittels der Räder 6 ist das fahrerlose Transportfahrzeug 2 auf der befahrbaren Fläche 3 verfahrbar. Der Antrieb der Räder 6 erfolgt dabei mittels einer ersten Antriebs- und Steuereinheit 7, die auf die Räder 6 wirkt und ein autonomes Verfahren des fahrerlosen Transportfahrzeugs 2 auf der befahrbaren Fläche 3 erlaubt. Im Grundkörper 5 ist eine Ausnehmung 8 vorgesehen, die die Form eines liegenden "U" aufweist. An dem in der Zeichnung oberen U-Schenkel ist eine erste Anlagefläche 9, die hier als Abstützfläche fungiert ausgebildet. Am U-Boden befindet sich eine zweite Anlagefläche 10, die die Funktion eines Endanschlags übernimmt. Auf dem Grundkörper 5 ist ein Werkstückträger 11 lösbar befestigt und auf diesem ein Werkstück 12 aufgespannt. Außerdem befindet sich an dem Werkstückträger 11 ein optisch abtastbarer Positionsindikator 13. Weiter ist am Grundkörper 5 im Bereich des unteren U-Schenkels eine Verriegelungsöffnung 14 angeordnet, die Ausnehmung 8 hin offen ist.

Die Bearbeitungsstation 4 weist die Form eines "F" auf und steht mit dem F-Boden, ortsfest befestigt, auf der befahrbaren Fläche 3. Der obere F-Balken bildet die Werkzeugtraverse 15, an der der Werkzeugkopf 16 mit dem darin aufgenommenen Werkzeug 17 angeordnet ist. Gesteuert und angetrieben wird das Werkzeug 17 von einer zweiten Antriebs- und Steuereinheit 18, die in der Bearbeitungsstation 4 angeordnet ist. Weiter ist an der Werkzeugtraverse 15, von dieser aus nach unten zeigend, ein optischer Abtaster 19 angeordnet, der wie unten beschrieben, mit dem optisch abtastbaren Positionsindikator 13 an dem Werkstückträger 11 zusammenwirkt.

Der an der "F"-förmigen Bearbeitungsstation 4 untere F-Balken ist als Bearbeitungstisch 20 gestaltet, an der Bearbeitungsstation gestellfest, kraftabtragend befestigt und zusätzlich mittels tischbeinartiger Stützen 21 an seinem freien Ende 22 abgestützt. Diese Abstützung mittels der tischbeinartigen Stützen 21 ist optional und immer dann von Vorteil, wenn große Kräfte aufzunehmen sind, wie sie beispielsweise bei Stanz-, Verform- oder Einpressvorgängen vorkommen. Die in der Zeichnung obere Seite des Bearbeitungstisches 20 ist als Abstützfläche 23 ausgebildet und dessen Stirnseite an seinem freien Ende als Anschlagfläche 24. Weiter ist an dem Bearbeitungstisch 20 ein Verriegelungsbolzen 26 angeordnet, der kraftangetrieben, angesteuert durch die zweite Antriebs- und Steuereinheit 18, über die untere Fläche 25 des Bearbeitungstisches 20 ausfahrbar ist und wie unten beschrieben, mit der Verriegelungsöffnung 14 an dem Grundkörper 5 des fahrerlosen Transportfahrzeugs 2 zusammenwirkt.

Es ist an dieser Stelle zu erwähnen, dass der vorstehend und nachfolgend verwendete Begriff "Bearbeitungstisch" nicht dahingehend einschränkend zu verstehen ist, dass die Tischfläche wie im gewählten Beispiel angenommen eine Ebene sein muss, sie kann vielmehr auch konturiert gestaltet sein oder Führungen aufweisen. In einem solchen Fall ist der obere U-Schenkel der Ausnehmung an dem Grundkörper des fahrerlosen Transportfahrzeugs als korrespondierendes Gegenstück gestaltet.

Zur Beschreibung eines Bearbeitungsvorgangs ist zunächst angenommen, dass in einem vorgelagerten Schritt das fahrerlose Transportfahrzeug 2 mit dem Werkstückträger 11 bestückt wurde, auf dem das Werkstück 12 aufgespannt ist. Weiter ist angenommen, dass der Werkstückträger 11 fest mit dem fahrerlosen Transportfahrzeug 2 verbunden wurde. Dieser vorgelagerte, in Fig. 1 nicht dargestellte Schritt kann vollautomatisch ausgeführt werden, indem zum Beispiel der Werkstückträger 11 mit aufgespanntem Werkstück aus einem Lager mittels eines Handhabungsautomaten (nicht dargestellt) an das fahrerlose Transportfahrzeug 2 übergeben und durch am fahrerlosen Transportfahrzeug 2 angeordnete automatisch wirkende Spannmittel (nicht dargestellt) auf dieses aufgespannt wird. Weiter ist angenommen, dass sich das fahrerlose Transportfahrzeug 2, angetrieben und gesteuert durch die erste Antriebs- und Steuereinheit 7, in die in der Fig. 1 rechts dargestellte erste mit durchgezogenen Linien dargestellte Position bewegt hat.

Im nächsten Schritt wird nun das fahrerlose Transportfahrzeug 2, wie durch die Bewegungspfeile 27 angedeutet, durch entsprechende Steuerabläufe in der Antriebs- und Steuereinheit 7, in die Bearbeitungsstation 4 eingefahren. Dabei umgreift die Ausnehmung 8 den Bearbeitungstische 20 so, dass die erste Anlagefläche 9 auf der Abstützfläche 23 aufliegt. Um das Einfahren zu erleichtern kann vorgesehen sein, dass Anlagefläche 9 und Abstützfläche 23, also Abstützfläche und Gegenfläche, zunächst einen geringen Abstand zueinander aufweisen und dass bei Erreichen der Endposition der Grundkörper 5 des fahrerlosen Transportfahrzeugs 2 gegenüber den Rädern 6 abgesenkt wird, so dass die erste Anlagefläche 9 auf der Abstützfläche 23 stabil aufliegt. Bewerkstelligt wird ein derartiges Absenken durch die Antriebs- und Steuereinheit 7. Die Endposition ist dann erreicht, wenn die Anschlagfläche 24 an der zweiten Anlagefläche 10 anliegt. Für die hinsichtlich der Bewegungsrichtung seitliche Führung und Abstützung des fahrerlosen Transportfahrzeugs 2 ist der Abstand der tischbeinartigen Stützen 21 zueinander so bemessen, dass er im Wesentlichen der Breite "b" des fahrerlosen Transportfahrzeugs 2 entspricht. Um das Einfahren zu erleichtern können sowohl an dem fahrerlosen Transportfahrzeug 2 als auch an den tischbeinartigen Stützen 21 Einfädelschrägen (nicht dargestellt) vorgesehen sein. Für die Detektion der Lage des Werkstückträgers 11 und damit des Werkstücks 12 relativ zur Bearbeitungsstation 4, wird der an der Werkzeugtraverse 15 der Bearbeitungsstation 4 angeordnete, mit der zweiten Antriebs- und Steuereinheit 18 verbundene optische Abtaster 19 eingesetzt. Die zweite Antriebs- und Steuereinheit 18 stellt unter Zuhilfenahme des optischen Abtasters 19, der mit dem optisch abtastbaren Positionsindikator 13 zusammenwirkt, durch entsprechende Steuerungsabläufe die Lage des Werkstückträgers 11 und damit des Werkstücks 12 relativ zur Bearbeitungsstation 4 fest und veranlasst bei Ablage entsprechende Korrekturen. Dies kann auf unterschiedliche Weise geschehen. Eine Möglichkeit sieht vor, dass eine Abweichung der Lage von einer Referenzlage der ersten Antriebs- und Steuereinheit 7 in dem fahrerlosen Transportfahrzeugs 2 zum Beispiel auf funktechnischem Wege übermittelt wird und diese daraufhin eine Lagekorrektur des fahrerlosen Transportfahrzeugs 2 durchführt. Ist die angestrebte Lage erreicht, kann der Verriegelungsbolzen 26 ausgefahren werden und greift in die Verriegelungsöffnung 14 ein, so dass das fahrerlose Transportfahrzeug 2 an der Bearbeitungsstation fixiert ist. Für den Fall, dass der Werkzeugkopf 16 an der Werkzeugtraverse 15 horizontal verfahrbar ausgebildet ist, kann eine andere Möglichkeit vorsehen, die Koordinaten der Bearbeitungspunkte im Rahmen der festgestellten Abweichung der Lage von einer Referenzlage zu korrigieren. Da die Technik eine Vielzahl von Möglichkeiten kennt eine Lagekorrektur zweier Gegenstände relativ zueinander durchzuführen, sind die vorstehend beschriebenen Möglichkeiten lediglich als Beispiele zu verstehen, selbstverständlich können alle bekannten Möglichkeiten zum Einsatz kommen, wenn diese auf die jeweilige konstruktive Ausgestaltung anwendbar sind.

Das Trennen der Bearbeitungsanordnung 1 erfolgt, indem die vorstehend beschriebenen Schritte zur Zusammenführung in umgekehrter Reihenfolge ausgeführt werden.

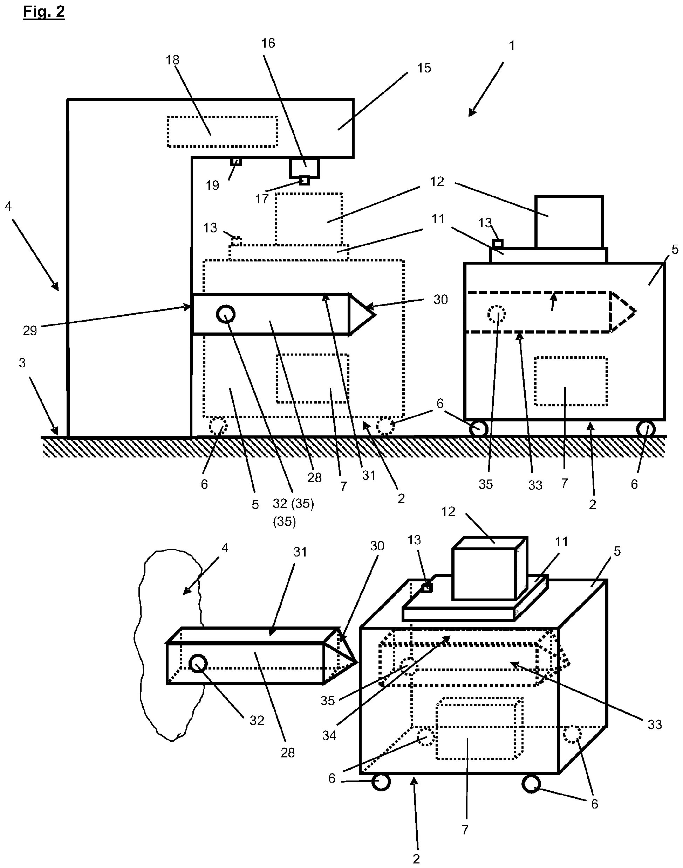

Eine gegenüber dem Beispiel nach Fig. 1 abgewandelte Ausführung der Bearbeitungsanordnung zeigt Fig. 2. Hier ist im oberen Teil der Darstellung wieder eine Seitenansicht der Anordnung gezeigt, im unteren Teil eine perspektivische Teildarstellung der für diese Ausführungsform relevanten Teile aus einem Blickwinkel von rechts oben. Nachdem sich die Grundanordnung nicht von dem Beispiel nach Fig. 1 unterscheidet, sind für gleiche Teile gleiche Bezugszeichen wie in Fig. 1 verwendet. Hinsichtlich dieser Teile und ihrer Funktion wird um Wiederholungen zu vermeiden auf die Beschreibung zu Fig. 1 verwiesen.

Auch im Beispiel nach Fig. 2 ist die Bearbeitungsstation 4 "F"-förmig ausgebildet jedoch mit anders gestaltetem unterem F-Balken. In Abweichung zu Fig. 1 ist im Beispiel nach Fig. 2 an Stelle des Bearbeitungstisches 20 (Fig. 1) als Abstützvorrichtung ein Abstützdorn 28 vorgesehen, der im gewählten Beispiel über den größeren Teil seiner Längserstreckung quaderförmig ausgebildet ist und im Wesentlichen einen quadratischen Querschnitt aufweist.

Diese Ausgestaltung ist nicht als limitierendes Merkmal zu verstehen, tatsächlich kann die äußere Form des Abstützdorns auch eine völlig andere Form aufweisen.

Mit seiner Basis 29 ist der Abstützdorn 28 an der Bearbeitungsstation 4 gestellfest und kraftabtragend befestigt und erstreckt sich von seiner Basis 29 aus im Wesentlichen waagrecht. An seinem freien Ende läuft der Abstützdorn 28 in einer Pyramidenspitze 30 aus. Um eine Abstützfläche bereitzustellen ist der Abstützdorn 28 so an der Bearbeitungsstation 4 angeordnet, dass sich eine waagerechte Stützfläche 31 ergibt. An dem Abstützdorn 28 ist nahe seiner Basis 29 ein kraftangetrieben seitlich, waagerecht ausfahrbarer Bolzen 32 angeordnet, der zum Verriegeln dient.

Aufgrund der geänderten Abstützvorrichtung ist im Beispiel an Fig. 2, gegenüber dem Beispiel nach Fig. 1, auch die Ausnehmung 8 (Fig. 1) im fahrerlosen Transportfahrzeug 2 geändert. Korrespondierend zu dem Abstützdorn 28 gemäß Fig. 2 ist in dem Grundkörper 5 des fahrerlosen Transportfahrzeugs 2 eine Ausnehmung in Form einer Dornaufnahme 33 angeordnet, die als Negativform zum Abstützdorn 28 gestaltet ist. Zur besseren Erkennbarkeit ist der Grundkörper 5 quasi durchsichtig dargestellt, die im Innern oder dahinter liegenden nicht sichtbaren Kanten sind gestrichelt eingezeichnet. Aufgrund ihrer Gestaltung weist die Dornaufnahme 33 eine flächige Auflage 34 auf, die als Gegenfläche zur Stützfläche 31 an dem Abstützdorn 28 wirkt. Wie aus der Darstellung erkennbar ist die Dornaufnahme 33 mittig unter dem Werkstückträger 11 angeordnet. Weiter ist in der Dornaufnahme 33 eine Bohrung 35 vorgesehen, die mit dem ausfahrbaren Bolzen 32 zusammenwirkt, wenn das fahrerlose Transportfahrzeug 2 in die Bearbeitungsstation 4 eingefahren ist.

Fährt das fahrerlose Transportfahrzeug 2, wie im Beispiel zur Fig. 1 beschrieben, mit dem Werkstückträger 11 und dem darauf angeordneten Werkstück 12 in die Bearbeitungsstation ein, wirkt die Pyramidenspitze 30 am Abstützdorn 28 als Zentriermittel, bis der Abstützdorn 28 in der korrespondierenden Dornaufnahme 33 geführt ist. Bei Erreichen der Endposition kann auch bei diesem Beispiel der Grundkörper 5 des fahrerlosen Transportfahrzeugs 2 gegenüber den Rädern 6 abgesenkt werden, so dass die flächige Auflage 34 auf der waagerechten Stützfläche 31 aufliegt. Um festzustellen ob die Endposition erreicht ist, kann auch bei diesem Beispiel der optische Abtaster 19 in Verbindung mit dem optisch abtastbaren Positionsindikator 13 verwendet werden. Ist das Erreichen der Endposition von der Antriebs- und Steuereinheit 18 mittels des optischen Abtasters 19 in Verbindung mit dem optisch abtastbaren Positionsindikator 13 registriert, wird der Bolzen 32 ausgefahren und greift in die Bohrung 35 ein, wodurch Bearbeitungsstation 4 und fahrloses Transportfahrzeug 2 in dieser Position verriegelt sind, so dass Bearbeitungsvorgänge erfolgen können. Hierbei werden sowohl senkrecht von oben auf das Werkstück 12 wirkende Kräfte, als auch schräg von oben, bis hin zu waagerecht wirkende Kräfte von dem Abstützdorn 28 aufgenommen und abgeleitet. Auch hier erfolgt das Trennen der Bearbeitungsanordnung 1, indem die vorstehend beschriebenen Schritte in umgekehrter Reihenfolge ausgeführt werden.

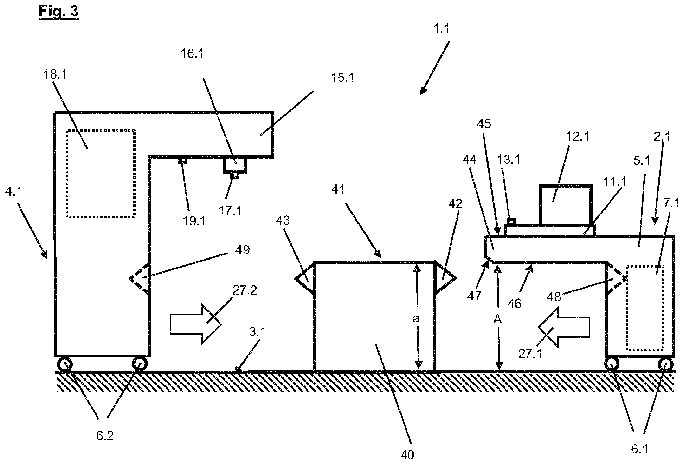

Wie bereits eingangs ausgeführt, kann die Abstützvorrichtung auch separat, also unabhängig von der Bearbeitungsstation angeordnet sein. Ein solches Beispiel zeigt Fig. 3 in schematischer Seitenansicht. Nachdem sich in diesem Beispiel die Grundanordnung erheblich von den vorstehend in Verbindung mit Fig. 1 und Fig. 2 beschriebenen Beispielen unterscheidet, aber auch bei diesem Beispiel für funktionsgleiche Teile die gleichen Begriffe verwendet sind, wurden zur besseren Unterscheidbarkeit im Beispiel nach Fig. 3 die Bezugszeichen für diese Teile um einen Index nach einem Punkt erweitert.

Wie bereits angesprochen, ist bei dem Beispiel nach Fig. 3 die Abstützvorrichtung separat ausgeführt. Dabei handelt es sich um einen Abstütztisch 40, der gestellfest auf einer befahrbaren Fläche 3.1 angeordnet ist. An dem Abstütztisch 40, der als Tischfläche eine Stützfläche 41 aufweist, sind unmittelbar unterhalb der Stützfläche, an gegenüberliegenden Seiten des Abstütztisch 40, ein erster Zentrieransatz 42 und ein zweiter Zentrieransatz 43 fest angeordnet. Die Zentrieransätze weisen Pyramidenform auf. In der Darstellung rechts vom Abstütztisch 40 ist ein fahrerloses Transportfahrzeug 2.1 platziert, das mittels Rädern 6.1 auf der befahrbaren Fläche 3.1 verfahrbar ist. Die Räder 6.1 befinden sich unter einem Grundkörper 5.1 in dessen oberen Bereich ein Ausleger 44 angeordnet ist. Der Ausleger 44 bildet einen Abstütztisch mit einer Tischoberseite 45 und einer planen Tischunterseite 46. Auf der Tischoberseite 45 ist ein Werkstückträger 11.1 aufgespannt, in den ein Werkstück 12.1 eingespannt ist. Weiter trägt der Werkstückträger 11.1 einen optisch abtastbaren Positionsindikator 13.1, der wie unten beschrieben mit einem optischen Abtaster 19.1 zusammenwirkt. Der Abstand "A" zwischen befahrbarer Fläche 3.1 und der Tischunterseite 46 des Auslegers 44 ist so bemessen, dass dieser im Wesentlichen der Höhe "a" der Stützfläche 41 des Abstütztisches 40 gemessen von der befahrbaren Fläche 3.1 entspricht, so dass die Tischunterseite 46 auf die Stützfläche 41 aufgleiten kann, wenn sich das fahrerlose Transportfahrzeug 2.1 in Richtung des Richtungspfeiles 27.1 bewegt. Um das Aufgleiten zu erleichtern, ist an dem Ausleger 44 eine Aufgleitschräge 47 angeordnet. Ferner befindet sich an dem Grundkörper 5.1 unmittelbar unter dem Ansatz des Auslegers 44 eine erste Zentrieröffnung 48, die in ihrer Form und der Höhe ihrer Anordnung mit dem ersten Zentrieransatz 42 an dem Abstütztisch 40 korrespondiert. Bewegt wird das fahrerlose Transportfahrzeug 2.1 mittels einer ersten Antriebs- und Steuereinheit 7.1.

In der Darstellung links vom Abstütztisch 40 ist eine Bearbeitungsstation 4.1 angeordnet. Diese hat die Form einer Säule mit an ihrem oberen Ende angeordneter Werkzeugtraverse 15.1, an der der Werkzeugkopf 16.1 und an diesem das Werkzeug 17.1 angeordnet ist. Gesteuert und angetrieben wird das Werkzeug von einer zweiten Antriebs- und Steuereinheit 18.1, die in der Bearbeitungsstation 4.1 angeordnet ist. Weiter ist an der Werkzeugtraverse 15.1, von dieser aus nach unten zeigend, ein optischer Abtaster 19.1 angeordnet, der wie oben angedeutet und unten näher beschrieben, mit dem optisch abtastbaren Positionsindikator 13.1 an dem Werkstückträger 11.1 zusammenwirkt. Die Bearbeitungsstation 4.1 weist Räder 6.2 auf, mittels der sie unter Zuhilfenahme der zweiten Antriebs- und Steuereinheit 18.1 auf der befahrbaren Fläche 3.1 verfahrbar ist. Weiter ist an der Bearbeitungsstation 4.1, unterhalb der Werkzeugtraverse 15.1, eine zweite Zentrieröffnung 49 angeordnet, die in ihrer Form und der Höhe ihrer Anordnung mit dem zweiten Zentrieransatz 43 an dem Abstütztisch 40 korrespondiert.

Um sowohl das fahrerlose Transportfahrzeug 2.1, mit dem daran angeordneten Werkstück 12.1, als auch die Bearbeitungsstation 4.1, mit dem daran angeordneten Werkzeug 17.1 in Arbeitsstellung zu bringen, werden beide, Transportfahrzeug 2.1 und Bearbeitungsstation 4.1, jeweils gesteuert und angetrieben durch die jeweilige Antriebs- und Steuereinheit 7.1, 18.1 in die durch die Richtungspfeile 27.1, 27.2 gezeigte Richtung bewegt. Im letzten Teil der Bewegung gelangen der erste Zentrieransatz 42 und die erste Zentrieröffnung 48 einerseits und der zweite Zentrieransatz 43 und die zweite Zentrieröffnung 49 andererseits miteinander in Eingriff und unterstützen das exakte Positionieren von fahrerlosem Transportfahrzeug 2.1 und Bearbeitungsstation 4.1 relativ zueinander. Auch hier kann vorgesehen sein, dass das exakte erreichen der Endposition, in der die Bearbeitung des Werkstücks 12.1 durch das Werkzeug 17.1 vorgenommen werden darf, mittels der Kombination optischer Abtaster 19.1, optisch abtastbarer Positionsindikator 13.1 von der mit dem optischen Abtaster 19.1 verbundenen Antriebs- und Steuereinheit 18.1 ermittelt wird. Sind Korrekturen der Position des fahrerlosen Transportfahrzeugs 2.1 erforderlich, kann eine solche Korrektur dadurch bewirkt werden, dass Antriebs- und Steuereinheit 18.1 entsprechende Korrekturdaten an die Antriebs- und Steuereinheit 7.1, zum Beispiel auf funktechnischem Weg übermittelt und die Antriebs- und Steuereinheit 7.1 entsprechende Korrekturen ausführt. Ist die Endposition erreicht, werden sowohl das fahrerlose Transportfahrzeug 2.1 als auch die Bearbeitungsstation 4.1 an dem Abstütztisch 40 mittels Verriegelungsmittel (in Fig. 3 nicht dargestellt) verriegelt und dann die Bearbeitungsschritte mittels des Werkzeugs 17.1 an dem Werkstück 12.1 durchgeführt. Das Trennen der Bearbeitungsanordnung 1.1 erfolgt, indem die vorstehend beschriebenen Schritte zur Zusammenführung in umgekehrter Reihenfolge ausgeführt werden.

## Patentansprüche

1. Bearbeitungsanordnung zur Bearbeitung von Werkstücken, wobei die Bearbeitungsanordnung (1, 1.1) ein fahrerloses Transportfahrzeug (2, 2.1) mit einer Werkstückaufnahme und wenigstens eine Bearbeitungsstation (4, 4.1) umfasst und wobei wenigstens das fahrerlose Transportfahrzeug (2, 2.1) relativ zur Bearbeitungsstation (4, 4.1) bewegbar ist, derart dass mittels des fahrerlosen Transportfahrzeugs (2, 2.1) ein in der Werkstückaufnahme aufgenommenes Werkstück (12, 12.1) in eine Bearbeitungsposition transportierbar ist, wobei eine Abstützvorrichtung vorgesehen ist, die bei in Bearbeitungsposition befindlichem Werkstück (12, 12.1) am fahrerlosen Transportfahrzeug (2, 2.1) oder an dem im fahrerlosen Transportfahrzeug (2, 2.1) aufgenommenen Werkstück (12, 12.1) angreift derart, dass von der Bearbeitungsstation (4, 4.1) auf das Werkstück (12, 12.1) aufgebrachte Kräfte ohne Lageveränderung des Werkstücks (12, 12.1) durch die Abstützvorrichtung aufnehmbar sind, **dadurch gekennzeichnet, dass** die Abstützvorrichtung Teil der Bearbeitungsstation (4, 4.1) ist und bei in die Bearbeitungsstation (4, 4.1) eingefahrenem fahrerlosem Transportfahrzeug (2, 2.1) das in der Werkstückaufnahme aufgenommene Werkstück (12, 12.1) direkt oder indirekt abstützt.

2. Bearbeitungsanordnung nach Anspruch 1, **dadurch gekennzeichnet, dass** die Bearbeitungsstation (4, 4.1) einen relativ zum Werkstück (12, 12.1) an unterschiedliche Bearbeitungsstellen des Werkstücks (12, 12.1) beweglichen Werkzeugkopf (16, 16.1) aufweist und dass die Abstützvorrichtung so ausgebildet ist, dass diese das Werkstück (12, 12.1) unabhängig von der jeweiligen Bearbeitungsstelle gleichermaßen kraftaufnehmend direkt oder indirekt abstützt.

3. Bearbeitungsanordnung nach Anspruch 1, **dadurch gekennzeichnet, dass** die Abstützvorrichtung ein an der Bearbeitungsstation (4) angeordneter Träger mit wenigstens einer flächigen Abstützung ist und an dem fahrerlosen Transportfahrzeug (2) und/ oder dem Werkstück wenigstens eine zu der wenigstens einen flächigen Abstützung als Gegenfläche wirkende Fläche vorgesehen ist und dass die flächige Abstützung und die Gegenfläche bei in die Bearbeitungsstation (4) eingefahrenem fahrerlosem Transportfahrzeug (2) in Anlage sind.

4. Bearbeitungsanordnung nach Anspruch 3, **dadurch gekennzeichnet, dass** der an der Bearbeitungsstation (4) angeordnete Träger ein Bearbeitungstisch (20) ist und dass an dem fahrerlosen Transportfahrzeug (2) ein Werkstückträger (11) angeordnet ist und dass Bearbeitungsstation (4) und fahrerloses Transportfahrzeug (2) so ausgebildet sind, dass nach Einfahren des fahrerlosen Transportfahrzeugs (2) in die Bearbeitungsstation (4) der Werkstückträger (11) direkt oder indirekt auf dem Bearbeitungstisch (20) aufliegt.

5. Bearbeitungsanordnung nach einem der vorhergehenden Ansprüche, **dadurch gekennzeichnet, dass** es sich bei der Bearbeitungsstation (4, 4.1) um eine Vorrichtung zum Verformen des Werkstücks (11, 11.1) handelt.

6. Bearbeitungsanordnung nach einem der vorhergehenden Ansprüche, **dadurch gekennzeichnet, dass** es sich bei der Bearbeitungsstation (4, 4.1) um eine Vorrichtung zum Einpressen wenigstens eines Bauteils in das Werkstück (11, 11.1) handelt.

7. Bearbeitungsanordnung nach einem der vorhergehenden Ansprüche, **dadurch gekennzeichnet, dass** an dem fahrerlosen Transportfahrzeug (2, 2.1) einerseits und an der Abstützvorrichtung und/ oder der Bearbeitungsstation (4, 4.1) andererseits Zentriermittel vorgesehen sind, die beim Einfahren des fahrerlosen Transportfahrzeug (2, 2.1) in die Bearbeitungsstation (4, 4.1) eine definierte Lage des Werkstücks (12, 12.1) zur Bearbeitungsstation (4, 4.1) herstellen.

8. Bearbeitungsanordnung nach Anspruch 7, **dadurch gekennzeichnet, dass** die Zentriermittel mechanisch wirkende Zentriermittel sind.

9. Bearbeitungsanordnung nach Anspruch 7, **dadurch gekennzeichnet, dass** die Zentriermittel elektronische auf die Steuerung der Bearbeitungsstation (4, 4.1) und/ oder auf die Steuerung des fahrerlosen Transportfahrzeugs (2, 2.1) wirkende Zentriermittel sind, und/oder dass an dem fahrerlosen Transportfahrzeug (2, 2.1) einerseits und an der Abstützvorrichtung und/ oder der Bearbeitungsstation (4, 4.1) andererseits Verriegelungsmittel vorgesehen sind, die nach dem Einfahren des fahrerlosen Transportfahrzeug (2, 2.1) in die Bearbeitungsstation (4, 4.1) dieses in einer definierten Lage zur Bearbeitungsstation (4, 4.1) lösbar verriegeln.

## Claims

1. Processing assembly for processing workpieces, wherein the processing assembly (1, 1.1) comprises a driverless transport vehicle (2, 2.1) with a workpiece mount and at least one processing station (4, 4.1) and wherein at least the driverless transport vehicle (2, 2.1) can be moved relative to the processing station (4, 4.1), such that by means of the driverless transport vehicle (2, 2.1) a workpiece (12, 12.1) mounted in the workpiece mount can be transported into a processing position, wherein a support device is provided which, with a workpiece (12, 12.1) located in processing position, bears against the driverless transport vehicle (2, 2.1) or the workpiece (12, 12.1) mounted in the driverless transport vehicle (2, 2.1) such that forces applied by the processing station (4, 4.1) to the workpiece (12, 12.1) can be absorbed by the support device without a change of position of the workpiece (12, 12.1), **characterised in that** the support device is part of the processing station (4, 4.1) and with a driverless transport vehicle (2, 2.1) driven into the processing station (4, 4.1) supports the workpiece (12, 12.1) mounted in the workpiece mount directly or indirectly.

2. Processing assembly according to claim 1, **characterised in that** the processing station (4, 4.1) has a tool head (16, 16.1) which is moveable relative to the workpiece (12, 12.1) at different processing points of the workpiece (12, 12.1) and **in that** the support device is configured so that the latter supports the workpiece (12, 12.1) directly or indirectly absorbing force equally independently of the respective processing point.

3. Processing assembly according to claim 1, **characterised in that** the support device is a carrier with at least one flat support arranged on the processing station (4) and on the driverless transport vehicle (2) and/or the workpiece at least one surface is provided acting as a counter surface to the at least one flat support and **in that** the flat support and the counter surface are in contact with a driverless transport vehicle (2) driven into the processing station (4).

4. Processing assembly according to claim 3, **characterised in that** the carrier arranged on the processing station (4) is a processing table (20) and **in that** a workpiece carrier (11) is arranged on the driverless transport vehicle (2) and **in that** the processing station (4) and driverless transport vehicle (2) are configured such that after driving the driverless transport vehicle (2) into the processing station (4) the workpiece carrier (11) bears directly or indirectly on the processing table (20).

5. Processing assembly according to any of the preceding claims, **characterised in that** the processing station (4, 4.1) is a device for deforming the workpiece (11, 11.1).

6. Processing assembly according to any of the preceding claims, **characterised in that** the processing station (4, 4.1) is a device for pressing at least one component into the workpiece (11, 11.1).

7. Processing assembly according to any of the preceding claims, **characterised in that** on the driverless transport vehicle (2, 2.1) on the one hand and on the support device and/or the processing station (4, 4.1) on the other hand centring means are provided, which on driving the driverless transport vehicle (2, 2.1) into the processing station (4, 4.1) produce a defined position of the workpiece (12, 12.1) relative to the processing station (4, 4.1).

8. Processing assembly according to claim 7, **characterised in that** the centring means are mechanically acting centring means.

9. Processing assembly according to claim 7, **characterised in that** the centring means are electronic centring means acting on the control of the processing station (4, 4.1) and/or on the control of the driverless transport vehicle (2, 2.1), and/or **in that** on the driverless transport vehicle (2, 2.1) on the one hand and on the support device and/or the processing station (4, 4.1) on the other hand locking means are provided, which after driving the driverless transport vehicle (2, 2.1) into the processing station (4, 4.1) lock the latter releasably in a defined position relative to the processing station (4, 4.1).

## Revendications

1. Dispositif d'usinage pour l'usinage de pièces, dans lequel le dispositif d'usinage (1, 1.1) comprend un véhicule de transport sans conducteur (2, 2.1) avec un logement de pièce et au moins une station d'usinage (4, 4.1), et dans lequel au moins le véhicule de transport sans conducteur (2, 2.1) peut être déplacé par rapport à la station d'usinage (4, 4.1), de sorte qu'une pièce (12, 12.1) logée dans le logement de pièce puisse être transportée dans une position d'usinage au moyen du véhicule de transport sans conducteur (2, 2.1), dans lequel un dispositif d'appui est prévu qui, lorsque la pièce (12, 12.1) se trouve en position d'usinage, agit sur le véhicule de transport sans conducteur (2, 2.1) ou sur la pièce (12, 12.1) logée dans le véhicule de transport sans conducteur (2, 2.1) de sorte que les forces appliquées à la pièce (12, 12.1) par la station d'usinage (4, 4.1) puissent être absorbées par le dispositif d'appui sans modifier la position de la pièce (12, 12.1), **caractérisé en ce que** le dispositif d'appui fait partie de la station d'usinage (4, 4.1) et, lorsque le véhicule de transport sans conducteur (2, 2.1) est introduit dans la station d'usinage (4, 4.1), il soutient directement ou indirectement la pièce (12, 12.1) logée dans le logement de pièce.

2. Dispositif d'usinage selon la revendication 1, **caractérisé en ce que** la station d'usinage (4, 4.1) présente une tête d'outil (16, 16.1) qui peut être déplacée par rapport à la pièce (12, 12.1) à différents points d'usinage de la pièce (12, 12.1), et **en ce que** le dispositif d'appui est conçu de sorte qu'il soutient la pièce (12, 12.1) de manière à absorber les forces de manière égale, directement ou indirectement, indépendamment du point d'usinage respectif.

3. Dispositif d'usinage selon la revendication 1, **caractérisé en ce que** le dispositif d'appui est un support disposé sur la station d'usinage (4) avec au moins un appui plat, et **en ce qu'**au moins une surface agissant comme contre-surface sur l'au moins un appui plat est prévue sur le véhicule de transport sans conducteur (2) et/ou sur la pièce, et **en ce que** l'appui plat et la contre-surface sont en contact lorsque le véhicule de transport sans conducteur (2) est introduit dans la station d'usinage (4).

4. Dispositif d'usinage selon la revendication 3, **caractérisé en ce que** le support disposé sur la station d'usinage (4) est une table d'usinage (20), et **en ce qu'**un support de pièce (11) est disposé sur le véhicule de transport sans conducteur (2), et **en ce que** la station d'usinage (4) et le véhicule de transport sans conducteur (2) sont conçus de sorte qu'après l'introduction du véhicule de transport sans conducteur (2) dans la station d'usinage (4), le support de pièce (11) repose directement ou indirectement sur la table d'usinage (20).

5. Dispositif d'usinage selon l'une quelconque des revendications précédentes, **caractérisé en ce que** la station d'usinage (4, 4.1) est un dispositif de déformation de la pièce (11, 11.1).

6. Dispositif d'usinage selon l'une quelconque des revendications précédentes, **caractérisé en ce que** la station d'usinage (4, 4.1) est un dispositif d'emboutissage d'au moins un composant dans la pièce (11, 11.1).

7. Dispositif d'usinage selon l'une quelconque des revendications précédentes, **caractérisé en ce que** des moyens de centrage sont prévus sur le véhicule de transport sans conducteur (2, 2.1) d'une part et sur le dispositif d'appui et/ou la station d'usinage (4, 4.1) d'autre part, qui produisent une position définie de la pièce (12, 12.1) par rapport à la station d'usinage (4, 4.1) lors de l'introduction du véhicule de transport sans conducteur (2, 2.1) dans la station d'usinage (4, 4.1).

8. Dispositif d'usinage selon la revendication 7, **caractérisé en ce que** les moyens de centrage sont des moyens de centrage à action mécanique.

9. Dispositif d'usinage selon la revendication 7, **caractérisé en ce que** les moyens de centrage sont des moyens de centrage électroniques agissant sur la commande de la station d'usinage (4, 4.1) et/ou sur la commande du véhicule de transport sans conducteur (2, 2.1), et/ou **en ce que** des moyens de verrouillage sont prévus sur le véhicule de transport sans conducteur (2, 2.1) d'une part et sur le dispositif d'appui et/ou la station d'usinage (4, 4.1) d'autre part, qui, après l'introduction du véhicule de transport sans conducteur (2, 2.1) dans la station d'usinage (4, 4.1), verrouillent celui-ci de manière amovible dans une position définie par rapport à la station d'usinage (4, 4.1).
